# EUROPEAN PATENT APPLICATION

(11) **EP 1 445 186 A2**
(43) Date of publication of application: **11.08.2004**
(21) Application number: 03380202.6
(22) Date of filing: 16.09.2003
(51) Int. Cl.: B62M 23/02, B62K 15/00

(54) **Motorised bicycle**

(30) Priority: 05.02.2003 ES 200300273 U
(71) Applicant: Asian Pioneer Espana, S.L., 28033 Madrid (ES)
(72) Inventor: Heitz Garavelli, Federico, 28033 Madrid (ES)
(74) Representative: Gil Vega, Victor

(57) **Abstract**

Characterised in that in the rear part of the frame, beneath the saddle, there is a receptacle for a battery, having envisaged an engine assembled on the axis of the rear wheel; the battery with contact points to the engine as well as a security fuse, a recharge connector and a serial ignition key being complemented by mechanisms connected to the brake levers on the handlebars to switch off the engine. Said battery having a flange upon which a moveable plate is placed. The front part of the frame comprises a thick arm that projects forward horizontally and is connected to the rear part of the frame by means of a sideways articulation where both the front and rear parts of the frame meet, having in the opposite side area a locking mechanism formed by a pivoting rod connected by a hinge joint to a manual lever. On the extreme front part of the arm corresponding to the front part of the frame, the handlebars are assembled and connected to a folding mechanism.

## Description

### OBJECT OF THE INVENTION

This invention relates to a motorized bicycle, which has the special characteristic that the frame is formed by two interconnected parts that can be folded by doing no more than operating a lever and a blocking element, with the part of the frame on which the saddle is mounted having a holder for a high-capacity battery. Furthermore, the motor is mounted on the rear wheel axle and is connected to the battery and with a firing circuit, assisted by special safety members.

The object of the invention is to provide a motorized bicycle which can be used as a normal bicycle, both the parts that form the frame, and the handlebars, the saddle or even the pedals, being easily folded, also holding a battery whose capacity gives it great autonomy.

### BACKGROUND OF THE INVENTION

Motorized bicycles are known which incorporate a motor powered by a battery, said motor generally being mounted on an area located beneath the saddle, occupying considerable space that prevents using large-sized batteries, for which reason the autonomy of conventional motorized bicycles is very limited, which means a drawback for the user who must always bear in mind if the battery is fully charged or not each time he/she wants to use the bicycle and it is not his/her intention to operate it using the corresponding pedals.

Folding motorized bicycles are also known wherein the frame usually has two interconnected parts so as to be able to fold one over the other and thus reduce the bicycle's total volume, allowing it to be transported more easily and even to be transported in a vehicle boot, stored in a cupboard, etc.

Nevertheless, conventional bicycles cannot be totally folded, or at least it is complicated when the handlebars are also foldable in relation to the frame, or the saddle.

In any case, the means provided to fold all those components or voluminous parts of the bicycle, are complex and, more importantly, the folding produces a unit with protruding parts, such as the pedals or even the handlebars, as specifically in relation to the pedals, they are not usually foldable, and the handlebars are folded without them being abutted on or hidden among the other parts of the frame, which means that the volume occupied by the bicycle when folded is not the most optimum one desired.

### DESCRIPTION OF THE INVENTION

The motorized bicycle recommended, of the type of those that are foldable and incorporate a motor and a battery, has characteristics which permit solving the problems corresponding to conventional motorized bicycles.

More particularly, the bicycle of the invention has the special characteristic that, on part of the frame located below the saddle and displaced backwards, a holder for a high-capacity prismatic battery is established, which can be mounted and detached very easily as it is only necessary to grip a handle which it has on its upper part and extract it from, or insert it in, said holder, a battery which has a flange in proximity to said upper front part on which a plate which can be fixed by a pair of hold-down nuts or wing-nuts, rests, determining a simple, efficient means to immobilize the battery in the holder, and whose nuts or wing-nuts, as well as the corresponding plate, are positioned on the fairing block which forms the holder.

For its part, the motor is directly mounted on the rear wheel axle of the bicycle, therefore not occupying any useful space, as the only thing that determines said motor arrangement is a type of cylindrical block or drum, concentric to the wheel, without laterally protruding with respect to the axle thereof. The motor housing is positioned over the wheel axle and, on that, the corresponding rotor, the unit being protected and enclosed in a casing determined by two side chucks conveniently fixed to one another, with the possibility of being detached.

The motor arrangement permits having greater space available for the battery, and due to this it can be high-capacity and conveniently positioned so it can be easily mounted and detached, all of this without it being an obstacle for the saddle or pedal axle or, of course for the latter's driving means.

Said battery has an ignition key in series with another provided in the frame, so that, using either of them, the motor can be activated or deactivated since said battery also has the circuit-closing contacts to power the motor. The battery also has a safety fuse and a connector to recharge it.

Likewise, means to deactivate the motor have been provided, which are connected to the brake handles positioned on the handlebars, both on the front brake handle and on the rear brake handle, whose means, through the corresponding cables, they reach the activation and deactivation contacts of the motor, and deactivate it when either of the two brake handles is operated.

Furthermore, it is worthy of note that the saddle mounting bar is bent backwards on its upper part, permitting it to be lowered to the maximum, without the battery being an obstacle, since in said lowered position the saddle is located above the battery.

The part of the frame where the battery, the saddle as well as the pedal axle, the transmission and the rear wheel fork are mounted, with the corresponding motor, has in its front area, articulation means for a thick horizontal arm projected forward, determining the front part of the frame, on whose front end there is a vertical cylindrical portion from which the front wheel fork projects downward and the handlebar stem projects upwards with the special characteristic that between this and said cylindrical portion an articulation and blocking mechanism is established, through which said handlebars can be laterally folded over the frame or immobilized in operative or normal use position.

The articulation of the horizontal arm corresponding to the front part of the frame is laterally positioned to permit its folding to one side and that said front part of the frame is abutted on the rear part of the frame whereon the battery is positioned. On the opposite side to that of the articulation of said arm, there is a blocking device that immobilizes said arm of the front part of the frame in relation to the rear part, a device that is formed by a rod that at one end is connected by a ball-joint to a manually operated lever, said rod being located in a slot or cavity established for this purpose in the corresponding side, affecting both the arm of the front part of the frame and the rear area of the block or rear part of the frame, with the special characteristic that the operation of the lever implies the release of the rod, permitting it to tilt and slide towards the outside of the aforementioned slot or cavity, releasing the arm and permitting the rotation thereof on its tilt and, therefore, the folding of said arm with the front wheel of the handlebars on the respective side of the rear part of the frame.

For its part, the articulation and blocking device to fold the handlebars is established from a rod that, at one end, is mounted on an axle, ending in an external lever and whose axle is established on a core provided on the lower end of the handlebar stem so that said rod passes through a part provided on the upper part of the cylindrical portion wherein the front end of the horizontal arm corresponding to the front part of the frame ends, having provided that both the core wherein the lower end of the handlebar stem, ends and the part through which the rod passes, have, on their opposing faces, complementary coupling means which enable the correct positioning of the handlebar stem, blocking by traction of the rod and therefore by the handlebar stem, against the part provided at the upper end of the vertical cylindrical portion, wherein the front end of the horizontal arm ends, and that rod can be blocked and immobilized by a manually operated lever whose release enables the rod to tilt in a groove established in the part through which it passes, and thus enable the collapsing and folding of the handlebar stem to one side of the frame.

Finally, and as another characteristic of the bicycle, it is worth mentioning the fact that the pedals are mounted so that they can also be folded and positioned as an extension of the pedal axle connecting rods, having blocking means in the operating position, and that blocking position being released by traction of a retractable part which is what constantly maintains the blocking position of the pedal body that is fixed on the end of the pedal axle connecting rod.

### DESCRIPTION OF THE DRAWINGS

To complement the description being provided and with the object of helping towards a better understanding of the characteristics of the invention, in accordance with a preferred example of practical embodiment thereof, a set of drawings is attached, being an integral part of said description, wherein the following is represented with an illustrative, non-limiting character:
- Figure 1: shows a side view of the bicycle object of the invention.
- Figure 2: shows a perspective view from the other side of the same bicycle.
- Figure 3: shows a perspective view of the battery that can be seen mounted on the bicycle represented in the previous figures.
- Figure 4: shows a close-up view of the motor on the rear wheel axle of the bicycle.
- Figure 5: shows an enlarged perspective close-up view of the blocking device between the horizontal arm of the front part of the frame and the rear part thereof.
- Figure 6: shows a perspective view of the close-up of the previous figure with the blocking device in release position and with the arm of the front part of the frame tiled partially towards the folding position.

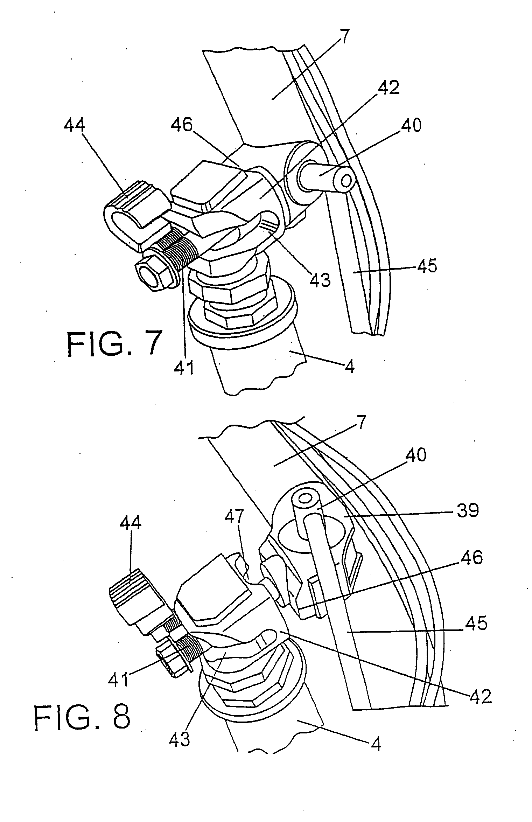

- Figure 7: shows a perspective close-up of the blocking device of the handlebar stem, with the lever in position to permit the un-blocking of said device.
- Figure 8: shows a perspective view of the close up of the previous figure in the release position of the blocking device, from which position the handlebars can be collapsed on the corresponding side of the frame.

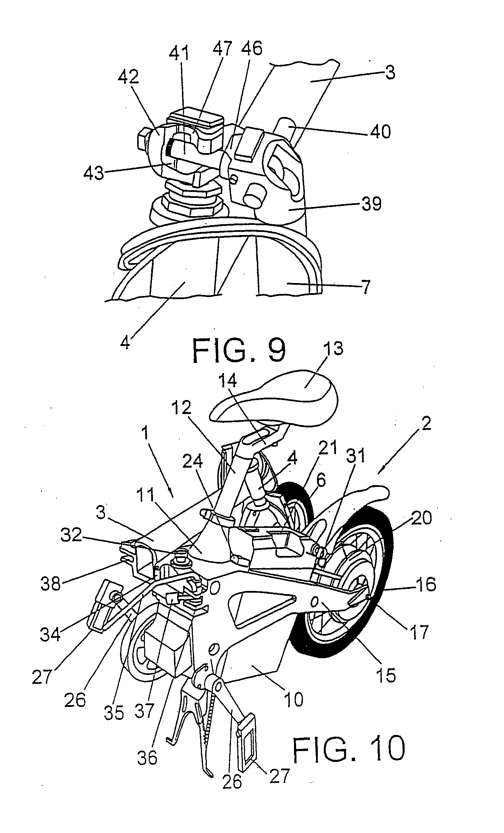

- Figure 9: shows a perspective view corresponding to the close-up in figures 7 and 8, with the handlebar stem in fully folded position.
- Figure 10: shows a perspective view of the bicycle represented in figures 1 and 2, in folded position.

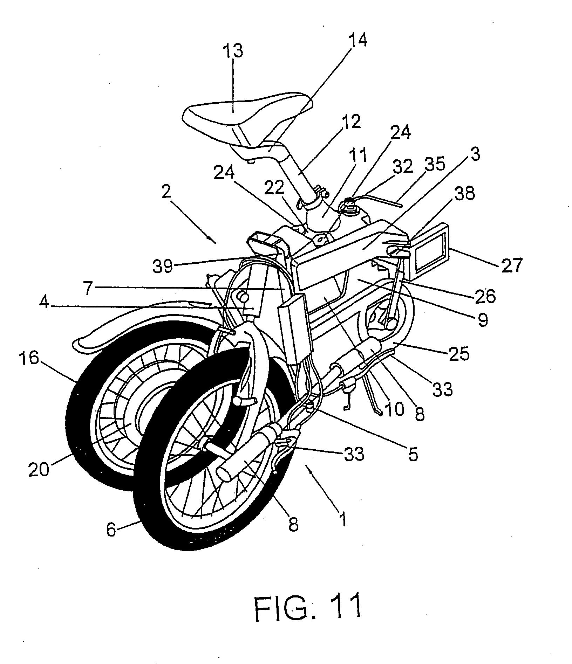

- Figure 11: shows, finally, another perspective view of the same bicycle in folded position, but seen from the opposite side to that represented in the previous figure.

### PREFERRED EMBODIMENT OF THE INVENTION

In view of said figures, it can be observed that the bicycle of the invention is of the folding type with a frame which includes a front part (1) and a rear part (2), both connected by articulation to one another and with a blocking device which permits the immobilization of one part in relation to the other as well as the collapsing and corresponding folding of the bicycle.

Part (1) of the bicycle frame is formed from a thick arm (3) which, at its front end, ends in a cylindrical portion in approximately vertical arrangement (4), from which the corresponding front wheel (6) mounting fork (5) projects, whilst the corresponding handlebar (8) stem (7) emerges from the upper part of that cylindrical portion (4).

Furthermore, the rear part (2) of the frame comprises a block like a fairing (9) which establishes a holder for a electric power battery (10), the corresponding tube (12) for the saddle (13) bar emerging from an upper projection (11) of that fairing block (9), a bar that is bent to determine a section (14) projected backwards, at the end thereof is precisely where the saddle (13) is mounted and can be positioned with more or less tilt.

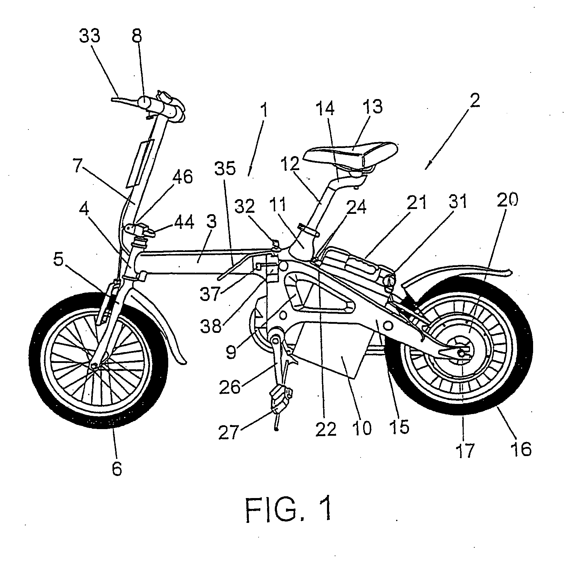

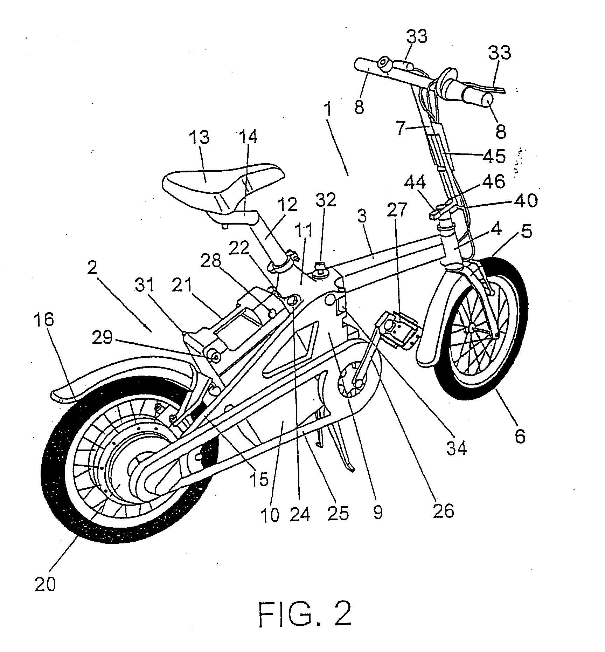

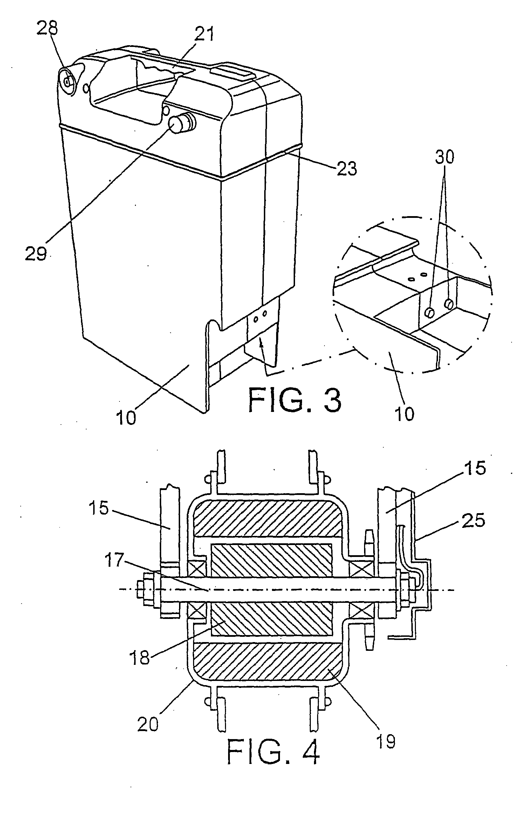

The fairing (9) extends laterally and backwards in a rear wheel (16) mounting fork (15) on whose axle (17), the corresponding motor is mounted with its housing (18) positioned on the axle (17), whilst the rotor (19) is mounted around the housing (18), and enclosed in a casing (20) determined by two chucks attached to one another, all of this without protruding in relation to the wheel thickness, or, what is the same, from the ends of the axle (17) thereof, said motor forming a block in the form of a drum concentric to the wheel. As can clearly be seen in figures 1 and 2, the battery (10) is located in an area behind and below the rear part or fairing (9) corresponding to the block or rear part (2) of the frame, this battery (10) being high-capacity and having an upper handle (21) through which it can be easily extracted from or inserted in the corresponding holder, fixed by a strip (22) which rests on a flange (23) established across the block or fairing in proximity to the upper end thereof, as is represented in figure 3, so that the resting of the strip (22) on said flange (23) implies the immobilization of the battery (10) in the housing thereof, immobilization which is ensured by nuts (24), in the form of wing-nuts, established above.

The projection or section (14) bent backward of the saddle bar (13) permits said saddle to be lowered to the maximum without obstructing the battery, permitting the easy mounting and detaching thereof.

On one side the bicycle has the fairing (25) for the driving chain which reaches the chuck through which the pedal axle passes, with the connecting rods (26) and the pedals (27).

Returning to the battery (21), it has a connector (28) to recharge it, a safety fuse (29), the corresponding contacts (30) that close the power circuit of the motor positioned on the rear wheel axle (16), also having a ignition key (31) in series with another ignition key (32) provided at the rear part of the bicycle frame, in front of the emergence (11) from which the tube (12) of the saddle bar (13) projects, so the motor can be activated and deactivated through either of the ignition keys (31-32).

Complementary means to deactivate the motor when braking occurs have also been provided, said means being formed from contacts connected to the brake handles (33), both that which operates the front brake and that which operates the rear brake, so that from those handles and, therefore, from the contacts internally connected thereto, emerge, in addition to the traction rope of the brake block clamp, another two cables that complete the activation/deactivation circuit of the motor, through which the operation of either brake implies the automatic deactivation of the motor, thus achieving complete safety in the motorized operation of the bicycle.

The arm (3) of the front part (1) of the frame, is connected to the rear part of said frame by an articulation (34) positioned on one of the sides, as is represented in figure 2, whilst on the other side, the corresponding blocking device has been provided which is formed from a manually operated lever (35) mounted in a recess (36) of the front, upper part of the fairing (9), to which lever, a rod (37) is connected by a ball-joint, mainly housed in a cavity (38) that affects both the lateral area of the arm (3) corresponding to the front part (1) of the frame and the side of the respective rear part (2) of said frame, specifically to the side part of the front area corresponding to the fairing (9).

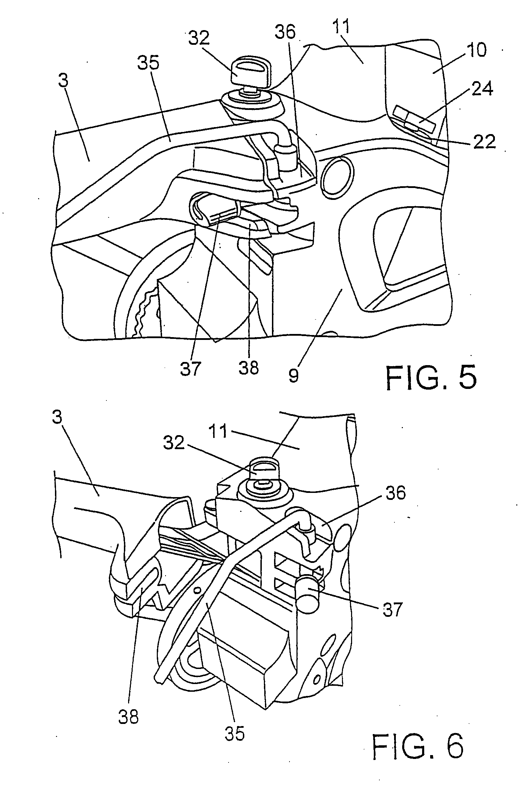

In a certain lever (35) position, as is represented in figure 5, the rod (37) is blocked and it is immobilized in the aforementioned cavity (38), maintaining the front part of the frame (1) and the rear part (2) of said bicycle frame blocked between it, and it can be used normally.

Now, if the lever is operated (35), the rod (37) is released, the manual operation of which produces pivoting towards the outside of the cavity (38), producing the release of the arm (3) and, therefore, enabling its tilting, or, what is the same, its collapsing to one side, which implies the folding of the front part (1) of the bicycle frame, as, to that arm (3), as has been said, the handlebars (8) with their stem (7) and the front wheel (6) with the other components connected thereto, are attached, collapsing through the aforementioned articulation (34).

As regards the mounting of the handlebar (8) stem (7) in relation to the portion (4) established at the front end of the corresponding arm (3) of the front part (1) of the frame, we should mention that said stem has a core (39) at its lower end, with a through axle (40) wherein the end of a rod (41) is mounted rotationally which, across the axle (40), projects through a part (42) provided precisely at the upper end of the portion (4), a part (42) that has a side aperture (43) to permit the lateral pivoting movement of said rod (41) as will be explained hereunder. This device, which is what will form the blocking and release device and enable the tilting of the stem (7) and, therefore, of the handlebar unit, is complemented with a lever (44) to block and immobilize the rod (41) maintaining said stem (7) and the handlebars (8) in operating or normal use position of the bicycle, whilst the operation of a lever (45) joined to the axle (40) implies the release of the rod (41) in its rotation around the axle (40) and, therefore, when the lever (44) is operated, the pivoting of that rod (41) can be effected, and with this, its displacement so that it emerges laterally outside the window (43) and permit the separation of the core (39) from the part (42), and therefore, the collapsing to one side of the handlebar (8) stem (7). The opposing faces of the core (39) of the part (42) have complementary coupling means for its correct positioning in the blocking position or normal use position, and whose complementary coupling means are formed by projections (46) from the core (39) and complementary inlets (37) to the part (42).

Finally, it is also worthy of note that the bicycle pedals (27) are mounted and can be folded by collapsing on the connecting rods (26) of the pedal axle, said pedals (27) having a retractable part which can be pulled to release the pedal (27) body and enable the pivoting of that pedal (27) body to be positioned in axial extension of the connecting rod (26), so that in operating position, said retractable part causes said pedal (27) part to be blocked on the part that is fixed with free rotation at the end of the connecting rod (26).

## Claims

1. Motorised bicycle, **characterised in that** in the rear part of the frame and beneath the saddle there is a receptacle for a battery, occupying a zone whose width is less than the space between the corresponding connecting rods of the pedals, having envisaged an engine assembled on the axis of the rear wheel, no thicker than the width of this wheel; with the special characteristic that the battery has contact points to the engine as well as a security fuse, a recharge connector and a serial ignition key with another established in an area of the frame being complemented by mechanisms connected to the brake levers on the handlebars to switch off the engine.

2. Motorised bicycle, as claimed in claim 1, **characterised in that** the battery has close to its upper part a flange upon which a moveable plate is placed, attached by means of nuts and butterfly nuts in the corresponding area of the rear part of the frame.

3. Motorised bicycle, as claimed in claim 1, **characterised in that** the front part of the frame comprises a thick arm that projects forward horizontally, with this arm being connected to the rear part of the frame by means of a sideways articulation where both the front and rear parts of the frame meet, having in the opposite side area a locking mechanism formed by a pivoting rod connected by a hinge joint to a manual lever, which immobilises the rod in the interior of the cavity that affects both the side area on the rear part of the arm of the front part as well as the side area on the rear part of the frame.

4. Motorised bicycle, as claimed in claim 3, **characterised in that** on the extreme front part of the arm corresponding to the front part of the frame, the handlebars are assembled and connected to a folding mechanism, formed from a piece established **in that** extreme front part of the arm and a core in the extreme lower part of the handlebars, with the piece and the core displaying on their opposing faces an additional configuration of coupling and locking in this position by means of a rod that protrudes from the core and crosses the piece, with said rod linked to a small lever locking/unlocking it.

5. Motorised bicycle, as claimed in any one of the preceding claims, **characterised in that** the bar on which the saddle is mounted upwards/downwards has its extreme upper end in a backwards L-shape.

6. Motorised bicycle, as claimed in any one of the preceding claims, **characterised in that** each pedal is assembled on the far end of the corresponding connecting rod of the pedal axis, by means of a piece with regard to which the pedal is joined to the same connecting rod, with each pedal joined to a manually operated retractable piece.
